# EUROPEAN PATENT SPECIFICATION

(11) **EP 0 460 724 B1**
(45) Date of publication and mention of the grant of the patent: **30.11.1994**
(21) Application number: 91201140.0
(22) Date of filing: 10.05.1991
(51) Int. Cl.: B60T 13/14

(54) **Hydraulic brake booster**
Hydraulischer Bremskraftverstärker
Amplificateur hydraulique de freinage

(30) Priority: 04.06.1990 US 533140
(43) Date of publication of application: 11.12.1991
(73) Proprietor: GENERAL MOTORS CORPORATION, Detroit Michigan 48202 (US)
(72) Inventor: Reuter, David Frederick, Beavercreek, Ohio 45385 (US)
(74) Representative: Denton, Michael John

(56) References cited:
- EP-A- 0 038 699
- DE-A- 3 439 271
- GB-A- 2 142 398
- US-A- 3 099 500

## Description

The field of the present invention is that of a high pressure hydraulic brake booster for a master cylinder of a vehicle.

Increasingly hydraulic brake boosters are finding acceptance in automotive applications. One reason why hydraulic brake boosters are more acceptable is that emission standards have lowered the amount of engine vacuum available to vacuum brake boosters therefore requiring much larger vacuum brake boosters to achieve the same amount of force. The above works against concerns of increasing vehicle fuel economy by decreasing space under the hood and also lowering weight.

To minimize the size of hydraulic brake boosters and also to make them compatible with antilock braking or traction control systems, which typically utilize high pressure pumps, hydraulic master cylinders have been increasingly designed to operate at increasingly higher pressures. The higher pressures allow for a more compact design but also provide additional challenges for the maintenance of seal life and hysteresis in the operation of the braking system. To meet the design challenges noted above there has been brought forth US-A-4,754,604. A booster in accordance with the preamble of Claim 1 is disclosed in EP-A-0,038,699.

A hydraulic brake booster in accordance with the present invention is characterised by the features specified in the characterising portion of claim 1.

The present invention is a simpler design than that of EP-A-0,038,699. The present invention provides an improvement over the hydraulic brake booster described in US Patent No. 4,754,604. The present invention eliminates the requirement for a tubular conduit return spring while at the same time providing a high pressure hydraulic booster with extended seal life and low hysteresis.

It is an object of the present invention to provide an improved hydraulic brake booster for a master cylinder.

The present invention will now be described, by way of example, with reference to the accompanying drawings, in which:-
Figure 1 is a sectional view of a preferred embodiment of the present invention;
Figure 2 is a sectional view of an alternative preferred embodiment of the present invention; and
Figure 3 is an enlarged partial view of the embodiment of the present invention shown in Figure 1 illustrated in an actuated position.

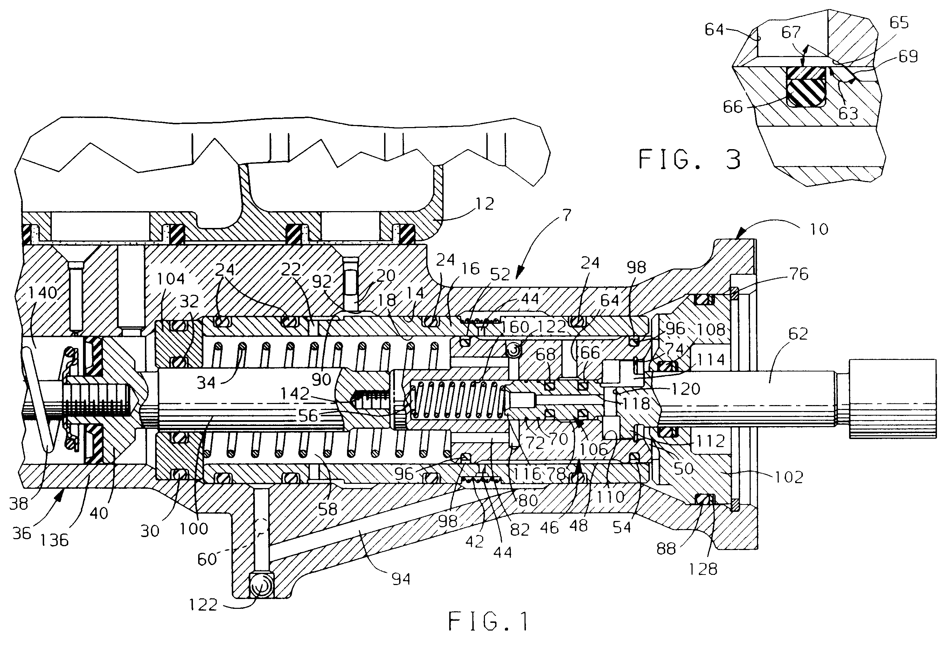

Referring to Figure 1 the hydraulic brake booster 7 of the present invention has a housing 10. Mounted on top of the housing 10 is a multichambered fluid sump or reservoir 12. The housing 10 has a longitudinal bore 14 and press fitted therein is a steel sleeve or liner 16. A steel sleeve is typically provided since it provides a lower coefficient of friction with sealing materials than a housing of anodized aluminium would provide. As shown in Figure 1 the housing 10 is integrally joined with the housing 136 of a master cylinder 36.

The liner 16 has a series of four O-rings 24 sealing it within the longitudinal bore 14 of the liner. The liner 16 inner circumference provides an (elongated longitudinal) bore 18. A radial bore 20 of the housing combined with a generally radial bore 22 of the liner 16 and undercuts 90 and 92 of the housing 10 and liner respectively form a first fluid line connecting the bore 18 with the reservoir 12.

A (fluid pressure) inlet 60 is provided in the housing 10 for the admittance of pressurized fluid to flow through a passage 94 and through a generally radial bore 44. A screen 42 is provided to eliminate any contaminates entering into the bore 18 of the liner 16. The passage 94 along with the generally radial bore 44 combined to define a second fluid line for admittance of pressurized fluid into the bore 18.

Slidably and sealably mounted within the bore 18 is a power piston 46. Along its outer periphery the power piston 46 has a first seal 52 and a second seal 54 which are both sealably, slidably engaged with the bore 18. Both seals 52 and 54 have an inner elastomeric O-ring 96 which can be capped by a seal cap ring 98 made of Teflon (trade mark) or other similar material.

The combination of the elastomeric O-ring 96 with the seal cap ring 98 is advantageous in that it lowers the friction of the power piston's 46 movement within the bore 18. Additionally, the seal cap ring 98 helps the seals 52, 54 to prevent leak down (which can occur when the vehicle is stationary for extended periods) and, when the inlet 60 is connected with an accumulator, to maintain high pressure within the passage 94 at all times. (Even when the vehicle engine is turned off).

The first seal 52 divides the bore 18 between a first pressure chamber 58 exposed to the reservoir 12 and a second pressure chamber 48 exposed to the inlet 60. The second seal 54 provides a divider between the second pressure chamber 48 and a third pressure chamber 50 provided at the rearward end of the power piston 46.

The power piston 46 has a generally radial bore 64 connecting with an interior annular undercut 78. Intersecting the radial bore 64 is a linear interior bore 160 generally parallel with bore 18. The linear interior bore 160 has an intersecting bore 80 which combined with parallel bores 82 provides a first passage allowing the linear interior bore 160 to be exposed to the reservoir 12 via the first pressure chamber 58. Radial bore 64 forms a second fluid passage connecting the linear interior bore 160 with the second pressure chamber 48.

The power piston 46 is operatively associated with a piston rod 100. In the embodiment illustrated the piston rod 100 has a threaded bore for a service screw (not shown) which allows for pullout of the liner 16 and the various components of the master cylinder 36. The piston rod 100 is in turn integrally connected with a piston 40. Piston 40 is slidably mounted in a pressure chamber 140 of the master cylinder 36.

In the rest position the power piston 46 abuts an end cap 102. End cap 102 abuts a snap ring 76 fitted within an interior annular groove in the housing 10. The end cap 102 has an outer elastomeric O-ring seal 88 and a back-up washer 128 of Teflon (trade mark) or other similar material along its outer periphery which seals the bore 14 of the housing 10. The back-up washer 128 aids in the prevention of seal extrusion.

To urge the power piston 46 to a rest (retracted or nonactuated) position against the end cap 102, there is provided a spring 34 or in the alternative such biasing can be provided by a spring 38 which biases the piston 40 along with its attached piston rod 100. If desired, the spring 38 can be designed to have sufficient force to eliminate the spring 34.

An end cap 104 provides a barrier between the master cylinder 36 and the bore 14 of the housing 10 and has a seal member 30 along its outer periphery and an inner seal 32 to seal the rod 100. End cap 104 is required so that the fluid in the master cylinder 36 is separated from the fluid in the hydraulic brake booster 7 for failure mode operation.

Slidably mounted within the linear interior bore 160 of the power piston 46 is the control valve 106. The control valve 106 is integrally connected with a push rod 62 which allows the control valve to be manually operable via the movement of a foot pedal (not shown) upon acutation by a vehicle operator. The push rod 62 is surrounded by an O-ring seal 108 which is mounted along the inner diameter of the end cap 102. The push rod 62 also has a flange 112 which slides into a cylindrical cutout 110 of the power piston 46. The control valve 106 is biased by a spring 56 contained within the linear interior bore 160 which pushes the flange 112 against a snap ring 74 positioned within an annular groove within the cylindrical cut-out 110 of the power piston 46.

In normal operation hydraulic fluid comes through inlet 60 into passage 94 and will be approximately at a pressure of 15,168 kPa - 17,926 kPa (2,200-2,600 lbs per square inch (PSI)). The above pressure will be essentially constant during vehicle operation or when the vehicle engine is shut off since the supplying pump (not shown) is usually connected with an accumulator (not shown). The supplying pump is signalled to automatically turn on whenever accumulator pressure is below a given predetermined value. Therefore under normal conditions second pressure chamber 48 will be pressurized along with the fluid contained within radial bore 64 and annular undercut 78.

Annular undercut 78 is provided to help diminish the amount of hydraulic noise which occurs with operation of the hydraulic brake booster 7. As mentioned previously the control valve 106 is spring biased rearwardly placing the flange 112 against the snap ring 74. A first forward (fluid tight) seal 68 prevents leakage of the fluid toward the interior of linear interior bore 160 (and then out to the first pressure chamber 58) and a second rearward (fluid tight) seal 66 prevents fluid communication between the radial bore 64 and the third pressure chamber 50. Seals 68 and 66 each have an O-ring and seal cap ring similar to seals 52, 54. The combination of sliding type seals 52, 54, 66 and 68 which form fluid tight connections prevents leakdown in pressure which can occur if the vehicle is stationary for extended periods even with the engine turned off. The above arrangement also prevents the red brake warning light from being illuminated nearly each time the vehicle is started that is characteristic of many hydraulic systems not incorporating a zero leak feature.

Upon the vehicle operator moving the foot pedal (not shown) the push rod 62 will move forward urging the control valve 106 against the action of the spring 56 first closing off intersecting bore 80 and then subsequently allowing pressurized fluid to flow between the radial bore 64, seal 66 and the third pressure chamber 50 via a milled slot 114 along the flange 112. Pressure will then build up within the third pressure chamber 50 (this pressure is often referred to as the modulation pressure) causing the power piston 46 to be urged leftward against the biasing of spring 34 and of spring 38 of the master cylinder 36 thus applying the brakes. Fluid within the third pressure chamber 50 can escape through a radial bore 120 and interior bore 118 in the control valve 106 to the linear interior bore 160. Pressure will build up within the linear interior bore 160 equal to the pressure of the third pressure chamber 50 causing the total diameter of the power piston 46 to define the pressure area. By the modulation pressure action on the entire cross sectional area of the power piston 46, the size of the hydraulic brake booster 7 can be minimized. The rate at which the power piston 46 moves may be controlled by the size of radial bore 120.

A reaction force will be felt by the vehicle operator equal to the pressure within the third pressure chamber 50 multiplied by the cross sectional area of the push rod 62 at the snap ring 74. The reaction force is utilized by the vehicle operator to sense how hard the brakes are being applied and it will be linearly proportional to the force of exertion of the hydraulic brake booster 7 upon the master cylinder 36. The reaction force also serves to move the control valve 106 to the right and close off any additional flow between the radial bore 64 and the third pressure chamber 50. It is the above described hydraulic force balance combined with the spring forces which define the modulation properties of the power piston 46 and the position of the control valve 106 during operation. Further push rod 62 movement to the left will cause modulation pressure to increase towards the pressure of the pressurization source.

If it is desirable to change the reaction force ratio, (usually because of different customer preferences for different vehicle) the only portions of the hydraulic brake booster 7 which require a change are a push rod 62 with a new diameter and a matching end cap. Therefore, the push rod 62 is capable of providing a hydraulic reaction force useful for servo operation or linear force multiplication.

Annular cuts 70 and 72 are provided for hydraulically centring the control valve 106 in the linear interior bore 160 and further minimizing valve leakage.

Upon release of the foot pedal, the control valve 106 will move back to its former position thereby sealing off third pressure chamber 50 from the radial bore 64 and connecting the third pressure chamber 50 with the reservoir 12 via the milled slot 114, radial passage 120, interior passage 118, intersecting bore 80 and parallel bores 82. Balls 122 do not supply any particular function other than to close off such passage during the manufacturing stage to provide a closed passage and are press fitted within their respective bore.

The annular undercut 78 has a converging tapered sides with the angle 67 (Figure 3) equal to approximately 30 degrees plus or minus 15 degrees. The angle 67 helps to increase the life of the seal 66. The control valve 106 has a matching annular taper with an angle 63 equal to 135 degrees plus or minus 15 degrees. The combination of the tapers 65 and 69 help to minimize hydraulic noise.

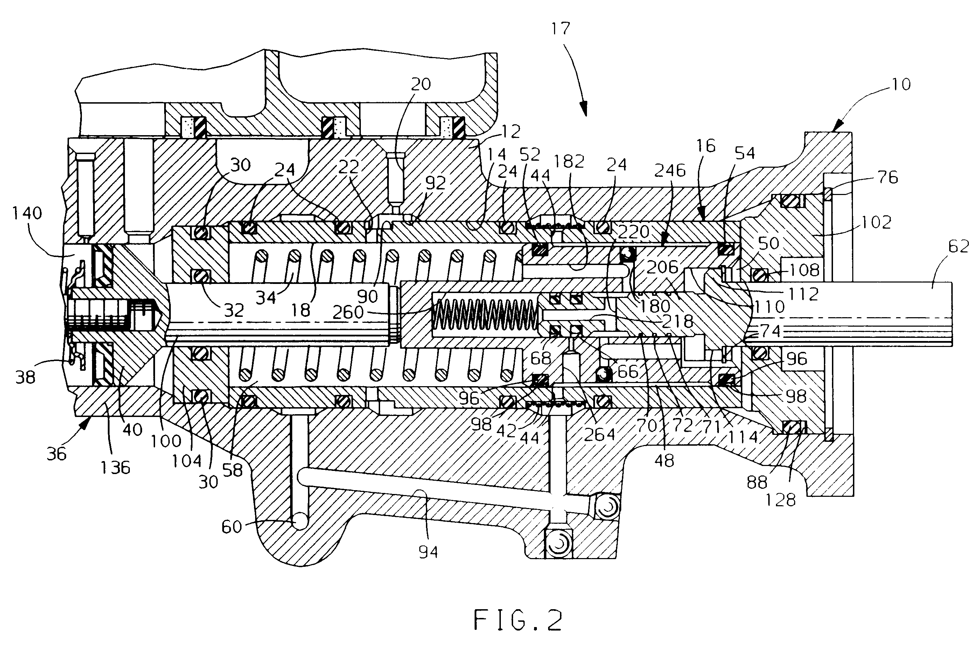

Figure 2 is an embodiment similar to Figure 1 and like parts are given similar reference numerals. The hydraulic brake booster 17 mainly differs from the embodiment shown in Figure 1 in slight modifications of the power piston 246 and the control valve 206. The operation of the hydraulic brake booster 17 is essentially identical to that as previously described for the hydraulic brake booster 7, however, the major differences are that the hydraulic centring grooves defined by annular cuts 70, 72 and 71 on the control valve 206 are located rearwardly of the portion of the control valve which modulates exposure of the fluid within the third pressure chamber 50, which is exposed to the sump via a radial passage 180.

The radial passage 180 of the hydraulic brake booster 17 is located rearwardly of the seals 68 and 66 instead of forwardly as shown in Figure 1.

## Claims

1. A hydraulic brake booster (7) for powering a master cylinder (36) having a piston (40) slidably mounted within a pressure chamber (140), the hydraulic brake booster comprising a housing (10) with a longitudinal bore (18) passing therethrough, at least a first fluid line (20,22,90,92) fluidly connected with a reservoir (12), and the housing having at least a second fluid line (94,44) for admittance of pressurized fluid; a power piston (46) operatively associated with the piston of the master cylinder sealably, slidably mounted within the longitudinal bore, the power piston being sealed with the longitudinal bore at a forward end (52) and a rearward end (54) dividing the housing bore into a first pressure chamber (58) connected with the first fluid line, a second pressure chamber (48) connected with the second fluid line, and a third pressure chamber (50), the power piston having an interior bore (160) with first (80,82) and second (64) passages fluidly connecting the interior bore with the first and second pressure chambers respectively, and the interior bore being fluidly connected with the third pressure chamber; means (34,38) biasing the power piston to a rest position; an end cap (102) sealing the longitudinal bore adjacent the third pressure chamber; and a control valve (106) operatively associated with a push rod (62), the control valve being slidably mounted within the interior bore, and having a first seal (68) preventing communication between the second pressure chamber and the first pressure chamber in the rest position, and a second seal (66) preventing fluid communication between the second pressure chamber and the third pressure chamber in the rest position, whereby movement of the control valve selectively connects the third pressure chamber with the first or second pressure chambers to power the master cylinder; characterised in that the push rod (62) is sealably (108) mounted in the end cap (102); in that the control valve (106) is formed in one piece; and in that the seals (66,68) are mounted on the control valve (106) and are, in the rest position, positioned one on each side of the second passage (64).

2. A hydraulic brake booster as claimed in claim 1, wherein the first passage (182) within the power piston (246) connects the interior bore (260) with the first pressure chamber (58) and both of the seals (68,66) on the control valve (206) are forward of the first passage.

3. A hydraulic brake booster as claimed in claim 1, wherein the first passage (82,80) within the power piston (46) connects the interior bore (160) with the first pressure chamber (58) and the seals (68,66) on the control valve (106) are rearward of the first passage.

4. A hydraulic brake booster as claimed in any one of claims 1 to 3, wherein the power piston (46) is sealed within the longitudinal bore (18) by elastomeric O-rings (96) capped by seal cap rings (98).

5. A hydraulic brake booster as claimed in any one of Claims 1 to 4, wherein the end cap (102) is removably secured in an open end of the longitudinal bore (18); and wherein the push rod (62) extends through the end cap, the diameter of the push rod where it sealably engages the end cap determining the reaction force of the booster.

## Patentansprüche

1. Ein hydraulischer Bremskraftverstärker (7) zur Energieerzeugung in einem Hauptzylinder (36) mit einem Kolben (40), der gleitbar innerhalb einer Druckkammer (140) angebracht ist, wobei der hydraulische Bremskraftverstärker umfaßt ein Gehäuse (10) mit einer dort hindurch verlaufenden longitudinalen Bohrung (18) und wenigstens einer ersten Fluidleitung (20, 22, 90, 92), die fluidmäßig mit einem Reservoir (12) verbunden ist, und das Gehäuse wenigstens eine zweite Fluidleitung (94, 44) für einen Zugang von unter Druck gesetztem Fluid aufweist; einen Energiekolben (46), der wirksam dem Kolben des Hauptzylinders zugeordnet ist und abdichtbar, gleitbar innerhalb der longitudinalen Bohrung angebracht ist, wobei der Energiekolben mit der longitudinalen Bohrung an einem vorderen Ende (52) und einem hinteren Ende (54) abgedichtet ist, was die Gehäusebohrung in eine erste Druckkammer (58), die mit der ersten Fluidleitung verbunden ist, eine zweite Druckkammer (48), die mit der zweiten Fluidleitung verbunden ist, und eine dritte Druckkammer (50) unterteilt, der Energiekolben eine innere Bohrung (160) mit ersten (80, 82) bzw. zweiten (64) Durchgängen aufweist, die fluidmäßig die innere Bohrung mit den ersten bzw. zweiten Druckkammern verbinden, und die innere Bohrung fluidmäßig mit der dritten Druckkammer verbunden ist; Mittel (34, 38), welche den Energiekolben in eine Ruheposition vorspannen; eine Endkappe (102), welche die longitudinale Bohrung benachbart der dritten Druckkammer abdichtet; und ein Steuerungsventil (106), das wirksam einer Druckstange (62) zugeordnet ist, wobei das Steuerungsventil gleitbar innerhalb der inneren Bohrung angeordnet ist und eine erste Abdichtung (68), die eine Kommunikation zwischen der zweiten Druckkammer und der ersten Druckkammer in der Ruheposition verhindert, und eine zweite Abdichtung (66) aufweist, die eine Fluidkommunikation zwischen der zweiten Druckkammer und der dritten Druckkammer in der Ruheposition verhindert, wodurch eine Bewegung des Steuerungsventils selektiv die dritte Druckkammer mit den ersten oder zweiten Druckkammern verbindet, um den Hauptzylinder mit Energie zu versorgen;
**dadurch gekennzeichnet,**
daß die Druckstange (62) abdichtbar (108) in der Endkappe (102) angebracht ist; daß das Steuerungsventil (106) einstückig ausgebildet ist; und daß die Abdichtungen (66, 68) auf dem Steuerungsventil (106) angebracht und, in der Ruheposition, eine auf jeder Seite des zweiten Durchgangs (64) positioniert sind.

2. Ein hydraulischer Bremskraftverstärker wie in Anspruch 1 beansprucht,
worin der erste Durchgang (182) innerhalb des Energiekolbens (246) die innere Bohrung (260) mit der ersten Druckkammer (58) verbindet und sich beide Abdichtungen (68, 66) auf dem Steuerungsventil (206) vor dem ersten Durchgang befinden.

3. Ein hydraulischer Bremskraftverstärker wie in Anspruch 1 beansprucht,
worin der erste Durchgang (82, 80) innerhalb des Energiekolbens (46) die innere Bohrung (160) mit der ersten Druckkammer (58) verbindet und sich die Abdichtungen (68, 66) auf dem Steuerungsventil (106) hinter dem ersten Durchgang befinden.

4. Ein hydraulischer Bremskraftverstärker wie in einem der Ansprüche 1 bis 3 beansprucht, worin der Energiekolben (46) innerhalb der longitudinalen Bohrung (18) durch elastomere O-Ringe (96) abgedichtet ist, die durch Abdichtkappenringe (98) mit Kappen versehen sind.

5. Ein hydraulischer Bremskraftverstärker wie in einem der Ansprüche 1 bis 4 beansprucht, worin die Endkappe (102) abnehmbar in einem offenen Ende der longitudinalen Bohrung (18) befestigt ist; und worin sich die Druckstange (62) durch die Endkappe erstreckt, wobei der Durchmesser der Druckstange, wo er sich abdichtbar mit der Endkappe in Eingriff befindet, die Reaktionskraft des Verstärkers bestimmt.

## Revendications

1. Amplificateur hydraulique de freinage (7) destiné à assister un maître-cylindre (36) comprenant un piston (40) monté de façon coulissante dans une chambre de pression (140), l'amplificateur hydraulique de freinage comprenant un carter (10) ayant un alésage longitudinal (18) s'étendant à travers celui-ci, au moins une première conduite de fluide (20, 22, 90, 92) hydrauliquement reliée à un réservoir (12), et le carter ayant au moins une seconde conduite de fluide (94, 44) pour l'admission de fluide sous pression; un piston de puissance (46) fonctionnellement relié au piston de l'ensemble de maître-cylindre, monté de façon coulissante dans l'alésage longitudinal, le piston de puissance étant monté de façon étanche dans l'alésage longitudinal, au niveau d'une extrémité avant (52) et d'une extrémité arrière (54), divisant l'alésage du carter en une première chambre de pression (58) reliée à la première conduite de fluide, une seconde chambre de pression (48) reliée à la seconde conduite de fluide, et une troisième chambre de pression (50), le piston de puissance ayant un alésage intérieur (160) comportant des premiers (80, 82) et seconds (64) passages reliant hydrauliquement l'alésage intérieur respectivement aux première et seconde chambres de pression, et l'alésage intérieur étant hydrauliquement relié à la troisième chambre de pression; des moyens (34, 38) rappelant le piston de puissance dans une position de repos; et un embout (102) fermant de façon étanche l'alésage longitudinal en contiguïté de la troisième chambre de pression; et une valve de commande (106) fonctionnellement reliée à une tige de poussée (62), la valve de commande étant montée de façon coulissante à l'intérieur de l'alésage intérieur et comprenant un premier joint d'étanchéité (68) empêchant, dans la position de repos, la communication entre la seconde chambre de pression et la première chambre de pression, et un second joint d'étanchéité (66) empêchant, dans la position de repos, la communication entre la seconde chambre de pression et la troisième chambre de pression, le déplacement de la valve de commande reliant ainsi de façon sélective la troisième chambre de pression à la première ou la seconde chambre de pression de manière à assister le maître-cylindre,
caractérisé en ce que la tige de poussée (62) est montée de façon étanche dans l'embout (102); en ce que la valve de commande (106) est réalisée d'un seul tenant; et en ce que les joints d'étanchéité (66, 68) sont montés sur la valve de commande (106) et sont placés, dans la position de repos, de chaque côté du second passage (64).

2. Amplificateur hydraulique de freinage selon la revendication 1, dans lequel le premier passage (182) compris à l'intérieur du piston de puissance (246) relie l'alésage intérieur (260) à la première chambre de pression (58), et les deux joints d'étanchéité (68, 66) montés sur la valve de commande (206) se trouvent en avant du premier passage.

3. Amplificateur hydraulique de freinage selon la revendication 1, dans lequel le premier passage (82, 80) compris à l'intérieur du piston de puissance (46) relie l'alésage intérieur (160) à la première chambre de pression (58), et les joints d'étanchéité (68, 66) montés sur la valve de commande (106) se trouvent en arrière du premier passage.

4. Amplificateur hydraulique de freinage selon l'une quelconque des revendications 1 à 3, dans lequel le piston de puissance (46) est monté de façon étanche dans l'alésage longitudinal (18) au moyen de joints toriques (96) en élastomère coiffés par des bagues d'étanchéité de protection (98).

5. Amplificateur hydraulique de freinage selon l'une quelconque des revendications 1 à 4, dans lequel l'embout (102) est fixé de façon amovible dans une extrémité ouverte de l'alésage longitudinal (18); et dans lequel la tige de poussée (62) s'étend à travers l'embout, le diamètre de la tige de poussée, à l'endroit où elle est en contact étanche avec l'embout, déterminant l'effort de réaction de l'amplificateur.
